Europäisches Patentamt

European Patent Office

Office européen des brevets

(19)

(11) Veröffentlichungsnummer : **0 114 965**
**B1**

(12) **EUROPÄISCHE PATENTSCHRIFT**

(45) Veröffentlichungstag der Patentschrift :
24.01.90

(21) Anmeldenummer : 83111756.9

(22) Anmeldetag : 24.11.83

(51) Int. Cl.⁵ : **E 04 B   1/62**, C 04 B 32/00

(54) **Beschichtete Fassaden- oder Dachdämmplatte aus Mineralfasern, sowie Verfahren zu ihrer Herstellung.**

(30) Priorität : 30.12.82 DE 3248663

(43) Veröffentlichungstag der Anmeldung :
08.08.84 Patentblatt 84/32

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
EP-A- 0 081 825
DE-A- 1 252 570
DE-A- 1 471 032
DE-A- 2 752 803

(73) Patentinhaber : Grünzweig + Hartmann Aktiengesellschaft
Bürgermeister-Grünzweig-Strasse 1-47
D-6700 Ludwigshafen am Rhein (DE)

(72) Erfinder : Schirmeisen, Josef
Deidesheimer Strasse 6
D-6704 Mutterstadt (DE)

EP 0 114 965 B1

**Beschreibung**

Die Erfindung betrifft eine beschichtete Fassaden- oder Dachdämmplatte aus kunstharzgebundenen Mineralfasern, insbesondere Steinwolle, sowie ein zu ihrer Herstellung besonders geeignetes Verfahren.

Derartige mit einer Beschichtung versehene Fassaden- oder Dachdämmplatten sind aus der DE-C-24 55 691 bekannt und haben sich in der Praxis durchaus bewährt. Bei diesen Platten konnte erstmals das Problem gelöst werden, daß die Beschichtung, neben Anforderungen, die sich grundsätzlich bei der Beschichtung von Mineralfaserplatten ergeben, einer ganzen Reihe zusätzlicher Anforderungen genügen muß, die sich aus der Funktion dieser Dämmplatten ergeben. Hierbei konnte nicht auf bekannte Beschichtungen zurückgegriffen werden, welche ohnehin nur für eine Erhöhung der Hitzebeständigkeit oder Verbesserung des Brandverhaltens von Mineralfaserplatten ausgelegt sind.

So sollen derartige Fassaden- oder Dachdämmplatten, wie dies auch bei sonstigen Mineralfaserplatten die Regel ist, nicht brennbar sein, und darüber hinaus gewünschten mechanischen Eigenschaften wie Abriebfestigkeit und dgl. genügen. Weiterhin soll die Beschichtungsmasse zu einem für die Großserienfertigung akzeptablen Preis herstellbar und in der Fertigung gut verarbeitbar und einfach aufbringbar sein, wodurch eine Vielzahl bekannter und möglicherweise technisch erfolgversprechender Vorschläge in der Literatur schon deswegen indiskutabel ist, weil eine Verwirklichung allenfalls unter Laboratoriumsbedingungen denkbar erscheint.

Speziell für die Verwendung als Dachdämmplatten kommt als Anforderung hinzu, daß die Beschichtung für Bitumen nicht durchlässig sein darf und die Dachdämmplatte darüber hinaus zumindest vorübergehend begehbar sein muß. Bei Verwendung als Fassadendämmplatte muß die Beschichtung sich als Putzträger eignen, also sowohl eine ausreichende Haftung gegenüber der regelmäßig hydrophob ausgerüsteten Mineralfaserplatte als auch gegenüber mineralischen oder kunstharzgebundenen Putzen aufweisen ; die letztere Anforderung erfordert beispielsweise eine gewisse Diffusionsoffenheit der Beschichtung, damit der Putz auf der Seite der Beschichtung Wasser abgeben und so unter Erzielung einer Haftverbindung antrocknen kann. Trotz der hierzu ausreichenden Diffusionsoffenheit der Beschichtung muß sie aber einen zusammenhängenden, rißfreien Film bilden.

Die vorstehend geschilderten, hauptsächlichen Anforderungen, auf die wegen weiterer Einzelheiten auf die Erläuterungen in der DE-C-24 55 691 verwiesen werden kann, sind so komplex, daß bislang neben der in der DE-C-24 55 691 erläuterten Beschichtung keine weiteren erfolgversprechenden Vorschläge bekannt geworden sind.

Bei der Dämmplatte gemäß der DE-C-24 55 691 besteht die Beschichtungsmasse aus Wasserglas als Binderphase und Zusätzen von feinkörnigen tonmineralischen Stoffen wie Oxiden oder Karbonaten der Erdalkalien oder des Zinks, Oxiden oder Hydroxiden des Aluminiums und/oder des Bariumsulfats als Härter.

Durch Einsatz von Wasserglas als filmbildendes Bindenmittel in Kombination mit Härtungsmitteln kann eine großflächige rissefreie und relativ dünne Schicht auf den zu beschichtenden Mineralfaserplatten mit guter Haft- und Abriebfestigkeit erhalten werden, welche auch alle sonstigen erläuterten Anforderungen auf die bislang bestmögliche Weise erfüllt und sich in der Praxis in großem Umfange bewährt hat. Um jedoch eine der wichtigsten Forderungen, nämlich der Wasserfestigkeit oder der Wasserbeständigkeit zu erfüllen, benötigt diese Beschichtung auf Wasserglasbasis nach deren Aufbringung auf die Mineralfaserplatte und Vortrocknung noch eine zusätzliche thermische Nachhärtung, um auch tatsächlich die gewünschten Eigenschaften zu erhalten. Diese Nachhärtung sollte bei relativ hohen Temperaturen durchgeführt werden. Da das organische Bindemittel der Mineralfaserplatte, in der Regel Phenolharz, jedoch oberhalb von ca. 250 °C thermisch zersetzt wird, würde dadurch die Mineralfaserplatte hinter der Beschichtung ihren inneren Zusammenhalt verlieren. Zwar ist die Nachhärtung der Beschichtung auf Wasserglasbasis auch bei Temperaturen bis 200 °C durchaus zufriedenstellend durchführbar, erfordert dann aber neben dem zwangsläufigen hohen Energieaufwand einen außerordentlich großen Zeitaufwand, der letztlich zu einer nicht unerheblichen Verteuerung des Produkts führt. Ganz abgesehen davon muß die Produktionslinie am Ende durch die erforderliche Trockenzone erheblich verlängert werden.

Demgegenüber liegt der Erfindung die Aufgabe zugrunde, eine beschichtete Fassaden- oder Dachdämmplatte der im Oberbegriff des Anspruchs 1 angegebenen Gattung zu schaffen, die ohne eine aufwendige thermische Nachhärtung die geforderte Wasserfestigkeit der Beschichtung gewährleistet und sich in einer Großserienfertigung kostengünstig herstellen läßt.

Die Lösung dieser Aufgabe erfolgt durch die kennzeichnenden Merkmale des Anspruchs 1.

Dabei wird zunächst statt auf Wasserglas auf kolloidale Kieselsäure, also Kieselsol, zurückgegriffen. Da der Alkalianteil des Kieselsols im Vergleich zum Wasserglas vernachlässigbar klein ist, ergeben sich keine Probleme hinsichtlich der Verträglichkeit mit den Mineralfasern. Auch die Wasserbeständigkeit wird nicht durch die Gegenwart eines erheblichen Alkalianteils beeinträchtigt, so daß eine Nachhärtung zur Erzeugung der gewünschten Wasserbeständigkeit entfallen kann.

Jedoch ist dafür die im vorliegenden Zusammenhang unabdingbare Bildung eines geschlossenen Films in Frage gestellt, da getrocknete kolloidale Kieselsäure pulver- oder staubförmig vorliegt, so daß bei einer ausschließlichen Verwendung von Kieselsol keinesfalls mit einer den Anforderungen auch nur annähernd entsprechenden Schicht-oder Filmbildung gerechnet werden kann. Auf die Bildung eines

2

geschlossenen, rißfreien Filmes der Beschichtung kann jedoch nicht verzichtet werden. Um eine solche Filmbildung zu ermöglichen, ist es bekannt, Kieselsol mit gemahlenen Aluminiumsilikatfasern zu versetzen, wobei der Faseranteil sehr erheblich ist und den Anteil des Kieselsol überwiegen kann. Eine solche Beschichtungsmasse auf der Basis von Kieselsol mit einem Fasergehalt von rund 50 Gew.-% ist im Hinblick auf den hohen Fasergehalt sehr teuer, im Vergleich zu einer Beschichtungsmasse auf Wasserglasbasis rund um das Zehnfache teurer. Unter diesen Gesichtspunkten kommt eine Verwendung von Kieselsol mit Aluminiumsilikatfasern als Beschichtung für eine Großserienfertigung kaum in Frage.

Überdies haben dennoch durchgeführte Orientierungsversuche gezeigt, daß die Haftung einer solchen Beschichtung an der Mineralfaseroberfläche nicht ausreicht; denn der hohe Anteil an Aluminiumsilikatfasern in der Beschichtungsmasse verhindert ein ausreichendes Eindringen des Kieselsol in die Mineralfaseroberfläche zur dortigen Verankerung. Dabei ist zu bedenken, daß etwa bei Verwendung als Fassadendämmplatte die von der aufzubringenden Putzschicht ausgeübten Kräfte, insbesondere Scherkräfte, durchaus sehr erheblich sind.

Die Lösung beider Probleme, nämlich der für eine Massenfertigung zu hohen Kosten sowie der für die vorgesehene Anwendung unbefriedigenden Haftung der Beschichtung zur Plattenoberfläche können jedoch überraschend durch einen Kunstgriff gemäß dem weiteren Merkmal des Anspruchs 1 gelöst werden, wonach nämlich die Beschichtung zumindest weitgehend nicht auf der Oberfläche der Mineralfaserplatte, sondern in den oberflächennahen Faserschichten der Mineralfaserplatte erzeugt wird. Dies bedeutet, daß die Beschichtung aus einer durch Eindrücken der Beschichtungsmasse in die harzgebundene Mineralfaserplatte unter Brechen von Fasern im oberflächennahen Bereich der Mineralfaserplatte entstandenen Imprägnierschicht, die eine Dicke von einem oder mehreren Millimetern aufweist und einer aus der Beschichtungsmasse selbst gebildeten Oberflächenschicht besteht. Funktionell ersetzen dabei die oberflächennahen Mineralfasern der Mineralfaserplatte die sonst zur Filmbildung benötigten Aluminiumsilikatfasern, so daß deren Kosten eingespart werden können. Durch die Verbindung der noch in der Beschichtung liegenden Fasern mit der übrigen Faserstruktur der Mineralfaserplatte wird eine bestmögliche Verankerung der Beschichtung erzielt. Mittels anorganischer körniger Füllstoffe, wie sie sowohl beim gattungsgemäßen Stand der Technik vorgesehen sind, als auch in Kieselsolbeschichtungen verwendet werden, um einen Teil der dort für die Bildung einer geschlossenen Schicht erforderlichen Fasern zu ersetzen, kann die geschilderte Wirkung der Mineralfasern dahingehend unterstützt werden, daß zwischen den Mineralfasern eingelagerte körnige Füllstoffe noch vorhandene Lücken zwischen benachbarten Mineralfasern weiter schließen. Weiterhin können in bevorzugter Ausgestaltung insbesondere bei geringem Raumgewicht der Mineralfaserplatte der Beschichtungsmasse zusätzlich gemahlene Mineralfasern zugesetzt werden, die in Lücken der relativ lockeren Mineralfaseroberfläche eindringen und diese Lücken ebenfalls zu schließen helfen. Derartige eingelagerte gemahlene Mineralfasern tragen stärker als grobkörnige Füllstoffe zur Filmbildung bei. Die Menge der zugesetzten Mineralfasern kann insbesondere bei Platten mit höherem Raumgewicht und somit von Haus aus enger gepackten Mineralfasern sehr gering sein, und die Art der Fasern kann denjenigen der Mineralfaserplatte entsprechen. so daß sich hierdurch keine wesentlichen zusätzlichen Kosten ergeben. Insgesamt genügt es, wenn der Gewichtsanteil der Mineralfasern in der Beschichtung unter 30 Gew.-% der trockenen Beschichtungsmasse liegt. Das Eindrücken der Beschichtungsmasse in die Mineralfaserplatte erfolgt vorteilhaft im oberflächennahen Bereich der Mineralfaserplatte durch ein Aufbringen der Beschichtung durch Aufwalzen, wobei hierbei ein Teil der oberflächennahen Fasern gebrochen werden, so daß sich die Fasern dort enger aneinanderlagern und ein dichteres Netz bilden können.

Damit wird es möglich, eine zusammenhängende dichte Schicht in dem oberflächennahen Bereich der Mineralfaserplatte zu bilden, die sämtlichen gestellten Anforderungen genügt und außer einer bloßen Trocknung keinerlei Nachbehandlung bedarf. Damit entfällt nicht nur der eigentliche Aufwand der Nachhärtung, sondern ergibt sich auch eine Vereinfachung der Kontrollen, da — im Gegensatz zu einer nicht absolut ordnungsgemäßen Nachhärtung — eine unvollständige Trocknung völlig unkritisch ist, weil die Platte im Anschluß an die Herstellung an der Luft ausreichend Gelegenheit zu einer Nachtrocknung hat, so daß die erforderliche Wasserbeständigkeit gewährleistet ist.

Kolloidale Kieselsäure benötigt jedoch, um in der Solphase beständig zu sein, einen Zusatz eines Stabilisierungsmittels in der Regel in Form von Natriumoxid. Während jedoch bei Wasserglas das Natriumoxid in einem Anteil von beispielsweise 25 bis 30 Gew.-% vorliegt, genügt der Zusatz als Stabilisierungsmittel zur wässrigen kolloidalen Kieselsäure in einer Menge von weit unter 1 %, beispielsweise 0,2 Gew.-%. Damit das Kieselsol bei Trocknung an den eingelagerten Fasern und Füllstoffen eine geschlossene Schicht bilden kann, ist dessen Sol-Gel-Umwandlung erforderlich. Diese Sol-Gel-Umwandlung darf jedoch nicht vor dem Aufbringen der Beschichtung auftreten, da das Kieselsol mit dieser Umwandlung in den Gelzustand ausfällt und anschließend nicht mehr seine Bindungswirkung durch die Gelbildung entfalten kann. Das Stabilisierungsmittel, welches auch im Falle der Verwendung von Natriumoxid infolge der äußerst geringen Menge keine Beeinträchtigung der Wasserbestandigkeit und keine Probleme hinsichtlich der Verträglichkeit mit den Mineralfasern ergeben kann, reagiert jedoch empfindlich auf in der Beschichtungsmasse enthaltene Elektrolyte, wie Natriumsulfat, Calciumsulfat, Natriumchlorid usw. Wenn in der Masse elektrolythaltige Stoffe, also Stoffe, die wasserlösliche Substanzen enthalten bzw. abspalten, vorliegen, die mit dem Stabilisierungsmittel der kolloidalen Kieselsäure in Reaktion treten, so tritt eine vorzeitige Sol-Gel-Umwandlung und Ausfällung des Kieselsol auf, so daß die erfindungsgemäß erforderliche rißfreie Filmbildung nicht mehr in dem erforderlichen Umfang gelingt.

Daher ist weiter zu fordern, daß die Füllstoffe in dem Sinne chemisch inert gegenüber dem Stabilisierungsmittel des Kieselsol sind, daß sie zumindest weitgehend frei sind von Elektrolyten, die mit dem Stabilisierungsmittel des Kieselsol in Reaktion treten können.

Etwa aus der US-A-34 90 065 ist es zwar bekannt, Mineralfaserplatten mit einem Kieselsol enthaltenden Mittel in einer nur wenige Millimeter starken oberflächennahen Schicht zu imprägnieren, um die Standfestigkeit derartiger Platten im Brandfalle zu verbessern. Hierzu wird ein Bindemittel aus 5 bis 95 Gew.-% Kieselsol und 95 bis 5 Gew.-% Bentonit verwendet, wobei das Kieselsol und der Bentonit zusammen die Binderphase bilden, zusammen mit zwei körnigen anorganischen Füllstoffen, die einen Schmelzpunkt einmal unterhalb und einmal oberhalb etwa 1100 °C besitzen, wobei als höher schmelzender Füllstoff etwa ein hydratisiertes Aluminiumsilikat wie Ballton und für den niedriger schmelzenden Füllstoff ein Natrium-, Calium-, Calcium-, Magnesium- und Barium-Aluminosilikat wie Feldspat in Frage kommt. Im Brandfall ergibt der niedriger schmelzende Füllstoff eine zusätzliche verfestigende keramische Bindung, welche die körperliche Integrität der ein Stützgerüst bildenden, porösen Imprägnierungsschicht auch beim Wegbrennen der Mineralfasern aufrechterhalten soll. Der gesamte Feststoffgehalt des Imprägniermittels beträgt zwischen 2 und 25 Gew.-%, wobei durch Einstellung der Viskosität, Zusatz von Netzmitteln, mechanisch durch Einrakeln oder Einwalzen oder physikalisch durch Unterdruck an der der Beschichtung gegenüberliegenden Seite der Platte die Eindringtiefe und damit die Dicke der Imprägnierschicht bestimmt werden kann. Der Feststoffgehalt des Imprägniermittels wiederum besteht zu 1 bis 20 Gew.-% aus Kieselsol (Feststoffanteil), 1 bis 15 Gew.-% Bentonit, beide als Binderphase, Rest die beiden anorganischen Füllstoffe mit unterschiedlichen Schmelzpunkten in einem gegenseitigen Verhältnis zwischen etwa 1 : 9 und 9 : 1.

Auf diese Weise wird eine kunstharzgebundene Mineralfaserplatte mit verbessertem Brandverhalten durch eine wenige Millimeter dicke imprägnierte Oberflächenschicht dadurch erzeugt, daß eine Aufschlämmung der Feststoffe in die Oberfläche bis auf die gewünschte Tiefe eingebracht und die Platte sodann bei 200 °C eine Stunde lang getrocknet wird.

Im Falle der US-A-34 90 065 handelt es sich um Akustik-Deckenplatten oder dergleichen, bei denen die Verhältnisse im Zusammenhang mit den speziellen Problemstellungen bei Dachdämmplatten oder Fassadendämmplatten, insbesondere auch das Problem der Wasserfestigkeit nicht angesprochen sind. Eine Eignung hierfür liegt auch deshalb nicht vor, da es hier auf eine Bildung einer geschlossenen Schicht nicht ankommt und hierfür auch der Kieselsolanteil, der auf einen Wert von nur 1 Gew.-% abfallen kann, zu gering ist. Es wird in diesem bekannten Fall folgerichtig auch nicht das Kieselsol alleine anhand seiner Sol-Gel-Umwandlung zur Schichtbildung herangezogen, sondern eine Rinderphase in Form eines Gemisches aus Kieselsol und Bentonit. Bentonit ist ein Ton, der nach der ersten Fundstätte bei Fort Benton, Wyoming, USA benannt ist und sich durch hohe Quell- und Absorptionsfähigkeit auszeichnet, daher auch als Quellton bezeichnet wird. Bentonit besteht im wesentlichen aus Tonen der Montmorillonit-Gruppe, im weiteren Sinne also aus Schichtsilikaten, deren Quellfähgikeit daher rührt, daß Wasser in die Schichten eindringen und diese sprengen kann.

Derartige, entweder bei entsprechender Wahl der Lagerstätte natürlich oder durch nachträgliche Aktivierung gut quellfähige Tone dienen als Bindetone zur Erzeugung einer sogenannten Grünfestigkeit der Mineralfaserplatte im beschichteten Bereich für deren Handhabung, Lagerung usw. Im Brandfall geht diese Grünfestigkeit in eine keramische Bindung über, wie sie nach der Lehre der US-A-34 90 065 zur Verbesserung des Brandverhaltens der Mineralfaserplatte angestrebt wird.

Im Falle der Erfindung sind jedoch quellfähige Tone in der -Dinderphase, die ausschließlich aus Kieselsol besteht, nicht vorgesehen, da derartige Tone eben wegen ihrer Quellfähgikeit die Wasserbeständigkeit der Beschichtung mindern. Die Anwesenheit derartige Bindetone bei einer beschichteten Fassadendämmplatte würde mangels Wasserfestigkeit die Putzhaftung nicht gewährleisten. Darüber hinaus sollen nach der Lehre der US-A-34 90 065 auch als Füllstoffe montmorillonithaltige Tone eingesetzt werden, die entweder durch ihren natürlichen, von der Lagerstätte abhängigen hohen Gehalt insbesondere an Natrium-Montmorillonit oder durch Aktivierung infolge Wechselwirkung mit Alkalibestandteilen der anderen Stoffe in der Masse Quellfähigkeit aufweisen können. Auch wenn bei solchen, in den Füllstoffen enthaltenen Montmorillonit-Tonen der US-A-34 90 065 anders als beim dortigen Bentonit in der Binderphase eine Quellfähigkeit nicht erforderlich ist, dennoch aber problemlos zulässig ist, muß nach der Lehre der vorliegenden Erfindung für eine Beschichtung von Fassadendämmplatte aufgrund der obigen, im Rahmen der vorliegenden Erfindung aufgefundenen Überlegungen auch bezuglich der Füllstoffe eine Auswahl getroffen werden, die quellfähige Schichtsilikate wie insbesondere natriummontmorillonithaltige oder -erzeugende Stoffe ausschließt oder auf eine unschädliche vernachlässigbare Menge herabsetzt.

Als Füllstoffe können im Rahmen der Erfindung anorganische Substanzen, soweit sie nicht wasserlöslich sind, verwendet werden, wie Aluminiumoxid oder -hydroxid, Siliciumdioxid, nicht quellfähige gebrannte oder ungebrannte Tonmineralien, Talk, Mullit, Kreide, Zirkoniumoxid, Zinkoxid sowie Abmischungen dieser Stoffe. Weiterhin können als anorganische Füllstoffe bei Bedarf auch Pigmente zur Erzeugung einer gewünschten Farbgebung beigefügt werden, beispielsweise $Fe_2O_3$, $FeOOH$, $TiO_2$, $Cr_2O_3$. Bei Verwendung als Fassadendämmplatte ist es von großem Vorteil, wenn neben feinkörnigen

4

Fraktionen auch grobkörnige Füllstoffe mit einer Korngröße von 0,3 bis 1,5 mm mit verwendet werden, die unmittelbar an der Oberfläche der Mineralfaserplatte verbleiben und dort vom Kieselsol zusammen mit den oberflächenseitigen Fasern eingebunden werden und auf diese Weise zur Verbesserung der Putzhaftung die Rauhigkeit erhöhen.

Die kolloidale Kieselsäure kann erfindungsgemäß mit einem Feststoffgehalt zwischen etwa 10 und 50 Gew.-%, bevorzugterweise 30 bis 40 Gew.-%, verwendet werden, wobei das Kieselsol eine Teilchengröße von 5 μm bis 30 μm und eine spezifische Oberfläche von 100 bis 350 m²/g besitzt. Der unterschiedliche Feststoffgehalt kann zur Einstellung der Viskosität oder generell des Fließverhaltens der Beschichtungsmasse herangezogen werden, wobei aber natürlich auch eine weitere Verdünnung mit Wasser zur Erzielung einer gewünschten Konsistenz möglich ist.

Im Falle der Verwendung von grobkörnigen Füllstoffen, die eine Partikelgröße von mehr als 10 μm, insbesondere mehr als 100 μm besitzen und vorzugsweise in einer Menge unter 25 Gew.-% der trockenen Beschichtungsmasse vorliegen sollten, ist es erforderlich, Thixotropierungsmittel der Beschichtungsmasse zuzusetzen, um eine Sedimentation der groben Fraktion zu verhindern, was die Verarbeitbarkeit der Beschichtungsnasse in einer Großserienfertigung praktikabel macht. Als Thixotropierungsmittel eignen sich vorzugsweise anorganische wasserbindende Substanzen, die z. B. pyrogene Kieselsäure.

Als Andickungs- und Thixotropierungsmittel würden sich grundsätzlich auch Bentonite eignen. Da Bentonite die Wasserfestigkeit der Beschichtung in der geschilderten Weise jedoch stark herabsetzen, sind derartige Zuschläge für die Beschichtungsmasse einer erfindungsgemäßen Fassadämmplatte in größeren Mengen ungeeignet und auch in kleinen Mengen nicht empfehlenswert.

Ferner können zur Einstellung der Viskosität Andickungsmittel wie Methylzellulose, Stärkeprodukte usw. in der Beschichtungsmasse verwendet werden. Weiterhin ist es zweckmäßig, bei einer großtechnischen Aufbereitung der Beschichtungsmasse bekannte Substanzen zur Unterdrückung des Schäumens der Masse hinzuzufügen. Schließlich sollten geringe Mengen von bekannten Netzmitteln der Masse beigefügt weiden, um eine bessere Haftung der Beschichtung an den hydrophob ausgerüsteten Mineralfasern in der Dämmplatte zu gewährleisten.

Beim erfindungsgemäßen Verfahren zur Herstellung einer solchen beschichteten Mineralfaserplatte wird die Beschichtungsmasse in einer gewünschten Konsistenz hergestellt und etwa mittels einer Auftragswalze in die Oberfläche der Mineralfaserplatte eingedrückt. Das Eindrücken erfolgt dabei zweckmäßig in eine größe Tiefe als es der Dicke der Beschichtung bzw. Imprägnierung entspricht, so daß ein Großteil der oberflächennahen Mineralfasern gebrochen und nachverdichtet wird, und dabei gleichzeitig eine homogene Verteilung der Beschichtungsmasse in den oberflächennahen, teilweise gebrochenen und verdichteten Mineralfasern erfolgt. Dadurch können die Mineralfasern, ggf. im Verein mit zusätzlichen, der Beschichtungsmasse beigefügten Mineralfasern und Füllstoffen als Netzwerkbildner für das Kieselsol wirken, welches diese Stoffe umgekehrt bei seiner im Zuge der Trocknung erfolgenden Sol-Gel-Umwandlung bindet. Auf diese Weise wird eine geschlossene, rißfreie Oberflächenbeschichtung erzeugt.

Insgesamt sollten die Zuschlagstoffe, soweit sie in anderer Form als in Form von Mineralfasern vorliegen, in einer Menge von höchstens der Menge des Feststoffes im Kieselsol in der trockenen Beschichtungsmasse vorliegen.

Beispiel 1

Es wird eine Mineralfaserplatte mit einem Raumgewicht von 70 kg/m³ mit 8 Gew.-% Phenolharz als Bindemittel und 0,2 Gew.-% eines Hydrophobierungsmittels auf Silikonbasis in der üblichen Weise hergestellt, wobei als Mineralfasern im Beispielsfalle Basaltfasern verwendet werden mögen.

Es wird eine Beschichtungsmasse bereitgestellt mit folgender Zusammensetzung :

50 Gew.-% Kieselsol (40 Gew.-% Feststoffanteil $SiO_2$)
20 Gew.-% gemahlene Basaltfasern
29,1 Gew.-% Kaolin
0,2 Gew.-% Methylzellulose
0,1 Gew.-% Silikon-Entschäumer
0,5 Gew.-% pyrogene Kieselsäure
0,1 Gew.-% Alkylaryl -Sulfonat (als Netzmittel). -

Die gemahlenen Basaltfasern wurden mit einer Längenverteilung zwischen 20 und 300 μm sowie einer Durchmesserverteilung zwischen 1 und 10 μm zur Verfügung gestellt.

Diese Beschichtungsmasse wurde mit Hilfe einer Auftragswalze unter einem Druck von 15 N/cm² in die Oberfläche der Mineralfaserplatte eingedrückt. Beim Auftragen wurde die Plattenoberfläche durch die Auftragswalze um 8 mm niedergedrückt und dabei die Beschichtungsmasse in einer Menge von 700 g/m² in die oberflächennahen Bereiche der Basaltwolle eingedrückt. Hinter der Auftragswalze federte die Oberfläche der Mineralfaserplatte um ein gegenüber der Eindringtiefe der Auftragswalze etwas geringeres Maß zurück und enthielt die Beschichtungsmasse mit einer Eindringtiefe von 3 mm. Nach Trocknung bei knapp 200 °C über eine Dauer von einigen Minuten zeigte die Mineralfaserplatte eine geschlossene rißfreie Beschichtung mit rauher Oberfläche und guter Abriebfestigkeit,

Beispiel 2

Es wurde wiederum in der üblichen Weise eine Mineralfaserplatte aus Basaltwolle, jedoch mit einem Raumgewicht von 150 kg/m$^3$ und 3 Gew.-% Phenolharz als Bindemittel sowie 0,3 Gew.-% Hydrophobierungsmittel auf Silikonbasis hergestellt.

Als Beschichtungsmasse wurde folgende Zusammensetzung gewählt:

65 Gew.-% Kieselsol (40 Gew.-% Feststoffanteil $SiO_2$)
8 Gew.-% gemahlene Basaltfasern (Abmessungen wie Beispiel 1)
16,2 Gew.-% Kaolin
10,4 Gew.-% Aluminiumhydroxid mit einer Teilchengröße von mehr als 10 μm
0,2 Gew.-% Methylzellulose
0,1 Gew.-% Silikon-Entschäumer
0,1 Gew.-% Alkylaryl-Sulfonat als Netzmittel.

Diese Beschichtungsmasse wurde ebenfalls mit einer Auftragswalze mit einem Druck von 50 N/cm$^2$ auf die Platte aufgewalzt, wobei die Auftragswalze hier um 5 mm in die Plattenoberfläche eindrang. Die Auftragsmenge betrug dabei 400 g/m$^2$. Nach Zurückfedern der mit der Beschichtungsmasse getränkten Oberfläche der Mineralfaserplatte hinter der Auftragswalze lag die Beschichtungsmasse mit einer Eindringtiefe von 2 mm vor.

Nach entsprechender Behandlung wie beim Beispiel 1 ergab sich ebenfalls eine geschlossene rißfreie Beschichtung der Oberfläche, die eine zur Verwendung als Dachdämmplatte ausreichende Trittfestigkeit aufwies.

Bei beiden Beispielen drangen die gemahlenen Basaltfasern in die rauhe Oberfläche der Mineralfaserplatte ein, wobei jedoch in den unteren Bereichen der Imprägnierung praktisch ausschließlich Fasern der Mineralfaserplatte vorlagen. Ein Teil der gemahlenen Basaltfasern des Beispiels 1 und des Beispiels 2 sowie ein erheblicher Teil des Aluminiumhydroxids des Beispiels 2 lag an der Oberseite der Mineralfaserplatte, zwischen den dortigen gebrochenen Basaltfasern aus der Platte eingelagert, vor und erzeugte dort eine für den Putz griffige Oberfläche. Kaolin hingegen lag ebenso wie das Kieselsol über den gesamten Kernbereich der Beschichtung im wesentlichen homogen vor, drang also auch gut in die Oberfläche der Mineralfaserplatte ein, füllte dort die Hohlräume aus und stellte eine Verbindung mit der Faserstruktur der Mineralfaserplatte her.

Weitere Einzelheiten, Merkmale und Vorteile der Erfindung ergeben sich aus der nachfolgenden Beschreibung eines Ausführungsbeispieles anhand der Zeichnung.

Es zeigt

Fig. 1 einen Teilschnitt durch eine erfindungsgemäße Dämmplatte und

Fig. 2 eine schematisch vereinfachte Darstellung der Aufbringung der Beschichtung auf die Dämmplatte gemäß Fig. 1.

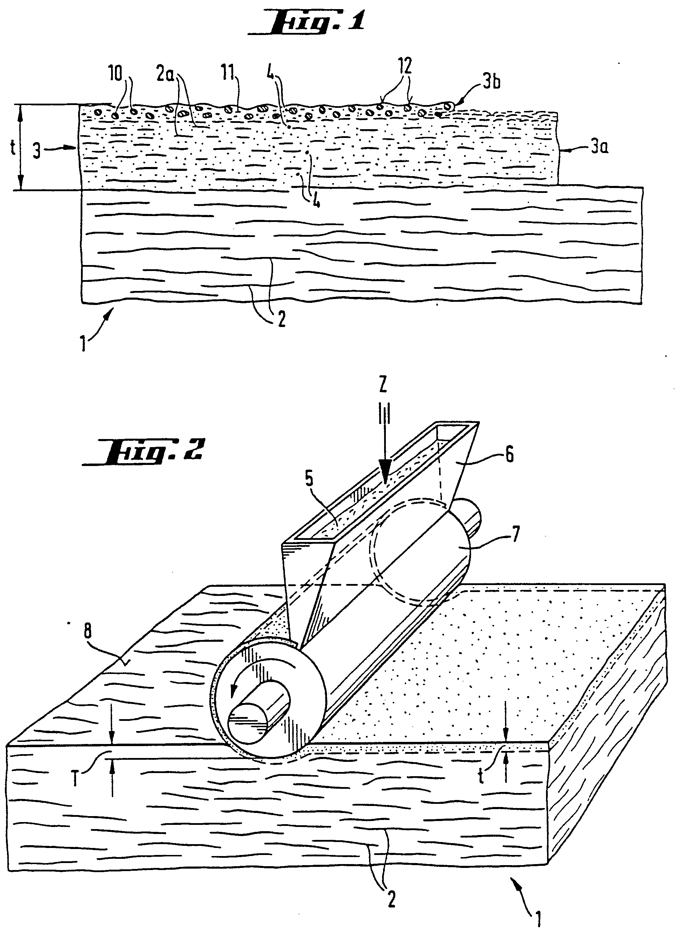

Die in Fig. 1 mit 1 bezeichnete Dämmplatte möge eine Fassadendämmplatte aus kunstharzgebundenen Mineralfasern 2, im Beispielsfalle aus mit Phenolharz gebundenen Basaltfasern, sein, und weist eine Beschichtung 3 auf.

Wie hierzu aus Fig. 2 ersichtlich ist, wird eine Beschichtungsmasse 5 gemäß Pfeil Z in einen Aufgabetrichter 6 einer Auftragswalze 7 aufgegeben und in der an sich bekannten Weise durch die Auftragswalze 7 in die mit 8 bezeichnete noch unbeschichtete Oberfläche der Dämmplatte 1 eingewalzt. Dabei dringt die Auftragswalze 7 über eine Tiefe T in die Oberfläche 8 der Dämmplatte 1 ein und drückt dabei unter gleichzeitiger Zerquetschung oberflächennaher Mineralfasern die Beschichtungsmasse 5 in die Mineralfasern der Dämmplatte 1 ein. An der Rückseite der Auftragswalze 7 federn die Mineralfasern teilweise zurück und nehmen dabei die zwischen den Mineralfasern eingedrungene Beschichtungsmasse 5 durch eine Art Pumpeffekt mit. Die Beschichtungsmasse liegt dann über eine wirksame Eindringtiefe t im oberflächennahen Bereich der Dämmplatte 1 vor, die deutlich kleiner sein kann als die Eindringtiefe T der Auftragswalze 7. Die Eindringtiefe t erfaßt dabei nur den wirksamen Kernbereich der Beschichtung während darunter durchaus noch in nicht unerheblichem Umfange Benetzungen der tiefer liegenden Mineralfasern durch die Beschichtungsmasse vorliegen können, dort aber keine auch nur annähernd geschlossene Schicht mehr vorliegt. Eine solche zusätzliche Benetzung ist im Sinne einer guten Anbindung der Beschichtung 3 an den kunstharzgebundenen Mineralfasern durchaus wünschenswert und erhöht die Haftfestigkeit der Beschichtung 3 nicht zuletzt auch im Hinblick auf die nahe der ursprünglichen Oberfläche 8 der Dämmplatte 1 zunehmend stärker gebrochenen Mineralfasern, die in Fig. 1 bei 2a angedeutet sind.

In Fig. 1 sind bei 4 feinkörnige Füllstoffe wie Kaolin mit einer Teilchengröße von höchstens etwa 5 μm, häufig weit weniger, angedeutet, die zusammen mit dem Kieselsol der Beschichtungsmasse gut in die Oberfläche 8 der Dämmplatte 1 eindringen können. Mit 10 sind grobkörnige Füllstoffe mit einer Teilchengröße von mehr als 10 μm, jedoch auch bis in den Bereich von 1 mm angedeutet, die in relativ geringer Menge der Beschichtungsmasse 5 zugesetzt sind und weit überwiegend an der Oberfläche oder im unmittelbaren Oberflächenbereich der Dämmplatte 1 verbleiben, durch die Basaltfasern der Dämmplatte 1 also an der Oberfläche abgefiltert werden. Ebenso verbleiben bei 11 veranschaulichte gemahlene Mineralfasern wie Basaltfasern mit einer Länge zwischen etwa 20 $\mu$m und 300 $\mu$m sowie einem Druchmesser zwischen 1 $\mu$m und 10 $\mu$m, bevorzugt zwischen etwa 3 $\mu$m und 6 $\mu$m, entsprechend den Basaltfasern 2 der Dämmplatte 1, bevorzugt im unmittelbaren Oberflächenbereich der Dämmplatte 1, da sie nur vereinzelt unter günstigen Bedingungen tiefer zwischen die Mineralfasern 2 bzw. die gebrochenen Mineralfasern 2a der Dämmplatte 1 eindringen können. In weiter innen liegenden Bereichen der Beschichtung übernehmen die gebrochenen Basaltfasern 2a der Dämmplatte 1 zunehmend die Funktion der der Beschichtungsmasse 5 zugegebenen gemahlenen Basaltfasern und dienen als Netzwerkbildner für die Bindung durch das Kieselsol zusammen mit den feinkörnigen Füllstoffen 4 wie etwa Kaolin.

Auf diese Weise ergibt sich ein Aufbau der Beschichtung 3 aus einer Imprägnierungsschicht 3a mit einer Dicke von einem oder mehreren Millimetern und einem dünnen oberflächenseitig geschlossenen Film 3b, der zwar ebenfalls in einer größeren Dicke hergestellt werden kann, der jedoch in einer sehr geringen Dicke ausreicht, die im Hinblick auf die rauhe Oberfläche der Dämmplatte 1 nicht mehr bemessen werden kann. Im Beispielsfalle ist durch den beigefügten Anteil an grobkörnigen Füllstoffen 10 und gemahlenen Basaltfasern 4 eine Dicke des Filmes 3b erzielt, die, wie in Fig. 1 rechts angedeutet ist, die obersten gebrochenen Mineralfasern 2a der Dämmplatte 1 vollständig satt abdeckt, so daß diese oberflächenseitig nirgends in Erscheinung treten. Eine solche oder noch größere Dicke des Filmes 3b, der dann eine eigene Schicht bilden kann, eignet sich insbesondere bei Verwendung der Dämmplatte 1 als Dachdämmplatte, um eine sauber geschlossene Beschichtung gegen ein Eindringen von Bitumen sowie eine entsprechende Trittfestigkeit zu erzielen; die grobkörnigen Füllstoffe 10 können hierfür jedoch auch gänzlich entfallen. Bei Verwendung als Fassadendämmplatte bewirken die grobkörnigen Füllstoffe und eine Anhäufung von Fasern im oberflächennahen Bereich, seien es gebrochene Mineralfasern der Dämmplatte 1 oder mit der Beschichtungsmasse aufgegebene gemahlene Mineralfasern 11, eine zwar geschlossene, rißfreie Außenoberflächeder Beschichtung 3, die dabei jedoch eine gewisse Rauhigkeit aufweist, wie bei Oberflächenerhebungen 12 in Fig. 1 angedeutet ist. Dabei können jedoch durchaus grobkörnige Füllstoffe 10. in geringem Anteil enthalten sein, die in Lücken zwischen den oberseitigen gebrochenen Mineralfasern 2a der Dämmplatte 1 eingelagert sind und nur geringfügig über diese hervorstehen, während im übrigen gebrochene Mineralfasern 2a oder gemahlene Mineralfasern 11 unmittelbar an der Oberfläche der Beschichtung 3 vorliegen und so für eine gewisse Aufrauhung sorgen.

Die Raumgewichte der zu beschichtenden Dämmplatten 1 liegen zwischen 50 und 300 kg/m³, bevorzugt zwischen 80 und 200 kg/m³, insbesondere im Bereich zwischen 130 und 170 kg/m³. Während nach den bisherigen Erfahrungen bei geringen Raumgewichten eine Zugabe gemahlener Mineralfasern 11 erforderlich ist, um die Lücken zwischen gebrochenen Mineralfasern 2a der Dämmplatte 1 durch Fasergebilde zu füllen und so eine geschlossene Schichtausbildung des Kieselsol zu ermöglichen, können zusätzliche gemahlene Mineralfasern 11 bei hohen Plattengewichten auch entfallen, wenn dort durch den Auftrag der Beschichtung etwa mittels der Auftragswalze 7 gebrochene Mineralfasern 2a und ungebrochene Mineralfasern 2 der Dämmplatte 1 in ausreichend dichter Packung vorliegen.

Wesentlich ist, daß durch Sol-Gel-Umwandlung des Kieselsol im Anschluß an den in Fig. 2 veranschaulichten Auftrag auf die Oberfläche 8 der Dämmplatte 1 das Kieselsol als Bindemittel für die fasrigen und körnigen Stoffe zur Bildung einer geschlossenen, rißfreien Beschichtung 3 dient. Dabei können Mineralfasern 2, insbesondere gebrochene Mineralfasern 2a der Dämmplatte 1 selbst herangezogen werden als Netzwerkbildner für die Beschichtung, ergänzt durch feinkörnige Füllstoffe 4 wie Kaolin, nicht jedoch durch quellfähige Tone. Bei Bedarf kann ein Abschluß der Beschichtung 3 nach außen hin durch einen oberflächenseitigen Film 3b erzielt werden, der insbesondere durch Zugabe grobkörniger Füllstoffe 10 eine etwas andere Zusammensetzung besitzen kann als die die Imprägnierungsschicht 3a bildenden Stoffe.

## Patentansprüche

1. Beschichtete Fassaden- oder Dachdämmplatte aus kunstharzgebundenen Mineralfasern, insbesondere Steinwolle, deren Beschichtung auf der Basis eines anorganischen silikatischen Bindemittels sowie teilchenförmiger anorganischer Zuschlagstoffe gebildet ist, dadurch gekennzeichnet, daß das anorganische Bindemittel kolloidale Kieselsäure (Kieselsol) ist, daß die Beschichtung (3) aus einer durch Eindrücken der Beschichtungsmasse in die harzgebundene Mineralfaserplatte unter Brechen von Fasern im oberflächennahen Bereich der Mineralfaserplatte entstandenen Imprägnierschicht (3a), die eine Dicke von einem oder mehreren Millimetern aufweist, und einer aus der Beschichtungsmasse selbst gebildeten Oberflächenschicht (3b) besteht, und daß die anorganischen Zuschlagstoffe zumindest weitgehend frei von Elektrolyten und von quellfähigen Schichtsilikaten wie insbesondere natürlichen oder durch Aktivierung quellfähigen Tonen der Montmorillonit-Gruppe sind.

2. Fassaden- oder Dachdämmplatte nach Anspruch 1, dadurch gekennzeichnet, daß in der Beschichtung (3) Mineralfasern mit einer Länge zwischen etwa 20 $\mu$m und 300 $\mu$m sowie einem Durchmesser zwischen 1 $\mu$m und 10 $\mu$m, vorzugsweise zwischen 3 $\mu$m und 6 $\mu$m sowie vorzugsweise in einer Menge unter 30 Gew.-% der trockenen Beschichtungsmasse vorgesehen sind.

3. Fassaden- oder Dachdämmplatte nach Anspruch 1 oder 2, dadurch gekennzeichnet, daß in der Beschichtung (3) neben einem Thixotropierungsmittel grobkörnige Zuschlagstoffe mit einer Partikelgröße von mehr als 10 μm, insbesondere mehr als 100 μm, vorzugsweise in einer Menge unter 25 Gew.-% der trockenen Beschichtungsmasse vorgesehen sind.

4. Fassaden- oder Dachdämmplatte nach einem der Ansprüche 1 bis 3, dadurch gekennzeichnet, daß nicht als Mineralfasern und nicht als grobkörnige Zuschlagstoffe vorgesehene Zuschlagstoffe feinkörnig mit einer Partikelgröße von unter 5 μm, vorzugsweise unter 3 μm, insbesondere unter 1 μm vorgesehen sind.

5. Fassaden- oder Dachdämmplatte nach Anspruch 4, dadurch gekennzeichnet, daß der feinkörnige Zuschlagstoff Kaolin ist.

6. Fassaden- oder Dachdämmplatte nach einem der Ansprüche 1 bis 5, dadurch gekennzeichnet, daß die Zuschlagstoffe, soweit sie in anderer Form als in Form von Mineralfasern vorliegen, in einer Menge von höchstens der Menge des Feststoffes im Kieselsol in der trockenen Beschichtungsmasse vorliegen.

7. Verfahren zur Herstellung einer Fassaden- oder Dachdämmplatte nach einem der Ansprüche 1 bis 6, dadurch gekennzeichnet, daß die Beschichtungsmasse in einer gewünschten Konsistenz unter erheblichem Druck in die Oberfläche der Mineralfaserplatte eingedrückt und in den oberflächennahen Bereichen der Mineralfaserplatte dabei gebrochene Mineralfasern erzeugt werden, wobei das Abbinden der Beschichtungsmasse durch ein Trocknen (Wasserentzug) sowohl bei Raumtemperatur als auch bei erhöhter Temperatur erfolgt.

## Claims

1. A coated facing panel or roof insulation panel of plastic-bonded mineral fibres, in particular rock wool, the coating of which is formed on the basis of an inorganic silicate-type binder and particulate inorganic additives, characterized in that the inorganic binder is colloidal silica (silica sol), that the coating (3) is composed of an impregnation layer (3a), which has been formed by pressing the coating composition into the resin-bonded mineral fibre panel with breakage of fibres in the superficial region of the mineral fibre panel and which has a thickness of one or more millimetres, and of a surface layer (3b) formed from the coating composition itself, and that the inorganic additives are at least largely free of electrolytes and of swellable layer silicates such as, especially, natural clays or clays, which are swellable as the result of activation, from the montmorillonite group.

2. A facing panel or roof insulation panel according to claim 1, characterized in that mineral fibres having a length of about 20 μm to 300 μm and a diameter of 1 μm to 10 μm, preferably 3 μm to 6 μm and preferably in a quantity of less than 30 % by weight of the dry coating composition are provided in the coating (3).

3. A facing panel or roof insulation panel according to claim 1 or 2, characterized in that coarse-grained additives having a particle size of more than 10 μm, in particular more than 100 μm, are provided, preferably in a quantity of less than 25 % by weight of the dry coating composition, in the coating (3) in addition to a thixotropic agent.

4. A facing panel or roof insulation panel according to any of claims 1 to 3, characterized in that additives not intended as mineral fibres and not intended as coarse-grained additives are provided in a fine-grained form having a particle size of less than 5 μm, preferably less than 3 μm, especially less than 1 μm.

5. A facing panel or roof insulation panel according to claim 4, characterized in that the fine-grained additive is kaolin.

6. A facing panel or roof insulation panel according to any of claims 1 to 5, characterized in that the additives, to the extent that they are in a form other than that of mineral fibres, are present in a quantity at most equal to the quantity of the solid in the silica sol in the dry coating composition.

7. A process for producing a facing panel or roof insulation panel according to any of claims 1 to 6, characterized in that the coating composition is pressed at a desired consistency under a considerable pressure into the surface of the mineral fibre panel and broken mineral fibres are thereby produced in the superficial regions of the mineral fibre panel, the setting of the coating composition taking place by drying (removal of water) both at room temperature and at elevated temperature.

## Revendications

1. Plaques d'isolation revêtues pour toitures ou façades à base de fibres minérales liées par une résine, notamment de laine de roche, dont le revêtement est à base d'un liant minéral silicaté et d'additifs minéraux sous forme de particules, caractérisées en ce que le liant minéral est de l'acide silicilique colloïdal (sol de silice) et en ce que le revêtement (3) est constitué d'une part d'une couche d'imprégnation (3a) de un à plusieurs millimètres d'épaisseur, obtenue en pressant le matériau de revêtement de la substance dans la plaque de fibres minérales liées par la résine tout en cassant les fibres de la zone superficielle de ladite plaque en fibres minérales et d'autre part d'une couche superficielle (3b) formée du matériau de revêtement lui-même et que les additifs minéraux sont essentiellement exempts d'électrolytes et de silicates de couche susceptibles de gonflement tels en particulier les argiles du groupe de la Montmorillonite, susceptibles de gonflement naturellement ou après activation.

2. Plaques d'isolation pour toitures ou façades selon la revendication 1, caractérisées en ce que le revêtement (3) contient des fibres minérales d'une longueur comprise entre environ 20 μm et 300 μm et d'un diamètre compris entre 1 μm et 10 μm — et de préférence entre 3 μm et 6 μm —, de préférence dans une quantité inférieure à 30% en poids de la masse totale du revêtement sec.

3. Plaques d'isolation pour toitures ou façades selon la revendication 1 ou 2, caractérisées en ce que le revêtement (3) contient à côté d'un agent thixotrope des additifs sous forme de grains de plus de 10 μm, notamment de plus de 100 μm, de préférence dans une quantité inférieure à 25% en poids de la masse totale du revêtement sec.

4. Plaques d'isolation pour toitures ou façades selon l'une des revendications 1 à 3, caractérisées en ce que sont prévus des additifs pulvérulents fins, autres que les fibres minérales et les additifs sous forme de grains, qui sont sous la forme de particules de moins de 5 μm, de préférence de moins de 3 μm et notamment de moins de 1 μm.

5. Plaques d'isolation pour toitures ou façades selon la revendication 4, caractérisées en ce que ledit additif pulvérulent fin est du kaolin.

6. Plaques d'isolation pour toitures ou façades selon la revendication 1 à 5, caractérisées en ce que les additifs présents autres que les fibres minérales — sont dans la masse du revêtement en une quantité correspondant à au plus la quantité de matière solide dans le sol de silice.

7. Procédé pour l'obtention d'une plaque pour toitures ou façades selon l'une des revendications 1 à 6, caractérisé en ce que l'on imprègne la surface de la plaque en fibres minérales par la substance du revêtement à la consistance souhaitée en exerçant une pression élevée, l'on produit des fibres broyées dans la zone superficielle de la plaque en fibres minérales et on obtient la cohésion de la substance de revêtement par dessication (extraction d'eau) à température ambiante ou à plus haute température.

9

*Fig. 1*

*Fig. 2*